# EUROPEAN PATENT SPECIFICATION

(11) **EP 3 296 882 B1**
(45) Date of publication and mention of the grant of the patent: **15.12.2021**
(21) Application number: 16189307.8
(22) Date of filing: 16.09.2016
(51) Int. Cl.: G06F 13/16

(54) **APPARATUS AND ASSOCIATED METHOD**
VORRICHTUNG UND ZUGEHÖRIGES VERFAHREN
APPAREIL ET PROCÉDÉ ASSOCIÉ

(43) Date of publication of application: 21.03.2018
(73) Proprietor: NXP B.V., 5656 AG Eindhoven (NL)
(72) Inventor: Pol, Evert-Jan, Redhill, Surrey RH1 1QZ (GB)
(74) Representative: Lee, Candice Jane

(56) References cited:
- EP-A1- 1 868 108
- US-A1- 2011 182 300
- JAKOB ROSEN ET AL: "Bus Access Optimization for Predictable Implementation of Real-Time Applications on Multiprocessor Systems-on-Chip", REAL-TIME SYSTEMS SYMPOSIUM, 2007. RTSS 2007. 28TH IEEE INTERNATIONAL, IEEE, PISCATAWAY, NJ, USA, 1 December 2007 (2007-12-01), pages 49-60, XP031194167, ISBN: 978-0-7695-3062-8
- None

## Description

The present disclosure relates to an apparatus comprising a real-time computing system and that is configured to control the data rate over a data bus. The present disclosure also relates to an associated method.

EP 11868108 A1 discloses requestors which acquire tokens before issuing access requests to a memory controller.

According to a first aspect of the present disclosure there is provided an apparatus comprising: a plurality of processors, a data bus, shared by the plurality of processors, and configured to at least receive data processed by each of the plurality of processors when performing predetermined tasks, the plurality of processors and data bus comprising at least part of a real-time computing system, wherein the predetermined tasks generate known or predictable amounts of data and the time at which subsequent predetermined tasks are scheduled is known in advance; a controller configured to provide for control of a maximum data rate at which data is provided to the data bus for transmission thereover by at least one of the plurality of processors in performing at least one of the predetermined tasks, wherein the controller is configured to provide for a maximum data rate at least comprising an impeded rate for the at least one predetermined tasks and an unimpeded rate wherein the impeded rate is less than the unimpeded rate and wherein the impeded rate comprising a rate that is less than a maximum rate at which the data bus is able to transmit data at the time of performing the at least one of the predetermined tasks and less than a maximum rate at which the at least one processor is able to generate the data for transmission over the data bus in performing the at least one predetermined task, wherein the controller is configured to divide the total data output in performing the at least one predetermined task into a plurality of blocks of data and wherein the controller is configured to provide the impeded data rate by allocating a predetermined number of intervals during which the blocks of data are provided to the data bus and wherein the number of allocated predetermined intervals is dependent on the amount of data generated by the predetermined task, the size of each of the blocks of data and a predetermined task output time comprising an amount of time during which the processed data can be output to the data bus before a subsequent predetermined task is scheduled to be performed.

The controller may therefore provide for predetermined task based throttling of the transmission of processed data across the data bus for particular predetermined tasks performed by at least one of the processors, the throttling at least between the unimpeded rate and the impeded rate. Thus, for one or more particular predetermined tasks, the controller may limit the maximum data rate at which data can be placed on the data bus to the impeded rate and for other predetermined tasks the maximum data rate at which data can be placed on the data bus is to be at the unimpeded rate.

In one or more embodiments, the impeded rate is less than the maximum data rate at which data could be provided to the data bus by at least one of the plurality of processors in performing the at least one of the predetermined tasks, at the time of performing the predetermined task.

Thus, the controller enforces a maximum data rate on the data transmission over the bus that is less than the data bus and the processor is capable of at the time that the predetermined task is performed, i.e. taking account of usage of the data bus by other processors or bus-connected elements during performance of the predetermined task and the (unimpeded) rate at which the processor would perform the task had the maximum data rate for transmission over the bus not been controlled to the impeded rate.

In one or more embodiments, the controller may be configured, for a first task of the predetermined tasks for processing by the at least one of the plurality of processors, to provide a maximum data rate comprising a first impeded rate and for a second task of the predetermined tasks for processing by the at least one processor, provide a maximum data rate comprising a second, different, impeded rate, thereby providing for task dependent data rate usage of the data bus.

In one or more embodiments, the controller may be comprised of a plurality of sub-controllers, wherein each of the sub-controllers may be associated with one of the plurality of processors and configured to control the maximum data rate its associated processor is able to provide at least processed data to the data bus.

In one or more embodiments, the controller may be configured to control the maximum data rate by allowing the blocks of data to be transmitted to the data bus one or more of consecutively and at time spaced intervals.

In one or more embodiments, the at least one processor may be associated with a bus access controller and the controller may be configured to provide for the control of the maximum data rate by provision of bus access tokens to the bus access controller, the number of bus access tokens for a particular predetermined task and the size of the blocks configured to provide for transmission of all of the data output by the processor during performance of the particular predetermined task, the or each bus access controller configured to sequentially receive and store the bus access tokens as they are issued by the controller for each of the predetermined number of intervals, wherein each of the bus access tokens represents a permission for one of the blocks of data to be transmitted from the processor to the data bus; wherein the bus access controller may expend one of the stored bus access tokens and thereby allow one of the blocks of data to be transmitted from the processor to the data bus only when:
i) sufficient data has been output by the at least one processor to form a block;
ii) the total number of bus access tokens stored by the bus access controller is greater than zero; and
iii) the data bus has sufficient resources available to accommodate receiving the block of data from the processor.

In one or more embodiments, the bus access tokens may be received by the controller at regular intervals, the size of the interval and the size of the block providing for the impeded data rate over the performance of the predetermined task.

In one or more embodiments, the real-time system may be a hard real-time computing system.

In one or more embodiments, at least one of the processor units may comprise one or more of a hardware accelerator and a programmable processor.

According to a second aspect of the present disclosure there is provided an electronic device including the apparatus of the first aspect.

The electronic device may comprise a personal computer, a portable electronic device, a graphics processing unit or a satellite navigation system, a radio for a mobile telephone, a media player or a (e.g. high quality) audio amplifier with digital input.

According to a third aspect of the present disclosure there is provided a method of operating a real-time computing system comprising: controlling a maximum data rate at which data is provided to a data bus for transmission thereover by at least one of a plurality processors in performing at least one of a plurality of predetermined tasks, wherein the predetermined tasks generate known or predictable amounts of data and the time at which subsequent predetermined tasks are scheduled is known in advance, said controlling being realized by providing for an impeded rate for the at least one predetermined task and an unimpeded rate, the impeded rate comprising a rate that is less than the unimpeded rate and wherein the impeded rate comprising a rate that is less than a maximum rate at which the data bus is able to transmit data at the time of performing the at least one of the predetermined tasks and less than a maximum rate at which the at least one processor is able to generate the data for transmission over the data bus in performing the at least one predetermined task, wherein controlling the maximum data rate comprises dividing the total data output in performing the at least one predetermined task into a plurality of blocks of data and providing the impeded data rate by allocating a predetermined number of intervals during which the blocks of data are provided to the data bus and wherein the number of predetermined intervals is dependent on the amount of data generated by the predetermined task, the size of each of the blocks of data and a predetermined task output time comprising an amount of time during which the processed data can be output to the data bus before a subsequent predetermined task is scheduled to be performed.

According to a fourth aspect of the present disclosure there is provided a computer readable medium comprising computer program code stored thereon, the computer readable medium and computer program code being configured to, when run on at least one processor, perform the method of the third aspect.

The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 shows an example of the amount of data provided for transmission to a data bus over time, illustrating two bursts of data transmission separated by a period of reduced or no data bus activity;
Figure 2 shows an example embodiment of an apparatus according to an example embodiment;
Figure 3 shows a plurality of blocks of data provided to the data bus such that the data is provided at an impeded rate; and
Figure 4 shows a flowchart illustrating an example method.

An apparatus may comprise a number of components which need to communicate with one another such as: two or more processors, for performing predetermined tasks; memory for storing data, such as that generated by the performance of predetermined tasks or input data on which the predetermined tasks are performed; peripheral devices and so on. Data may be transmitted between components by passing said data through a data bus shared by the components. A rate at which a data bus can transmit information is called the bus bandwidth and is defined as the product of the speed at which data can be passed through the data bus (often measured in Megahertz) and the width of the data bus (generally measured in bits). In one or more examples, components may provide data to the data bus in bursts, i.e. active time periods of data transfer to the bus separated by inactive time periods where no data or data transfer below a threshold amount is provided to the bus, the threshold amount lower the amount during the active periods. Access to the bus for the transmission of data thereover for a particular component may be limited by the current usage of the data bus by the other components. However, it may be advantageous in one or more embodiments to further limit (i.e. artificially limit) the maximum data rate at which a component can transfer data to the data bus for transmission thereover, such as for smoothing burst-like data transfer.

A real time system is one which must meet predefined deadlines in order to continue to function correctly in the performance of one or more predetermined tasks. In particular, the apparatus of the present disclosure may form part of a hard real-time system. Example real-time systems may include a radio for a mobile telephone, a media player or a (e.g. high quality) audio amplifier with digital input.

In some systems, the consequence of missing a deadline could result in system failure while in other systems missing deadlines may result in a reduction in performance of the system. For example, if an incoming signalling in a radio system is not processed by a required deadline then an audible artefact in the output of the radio may be heard by a listener. In another example, in a car engine control system, delayed signals could result in engine failure or damage.

In contrast to hard real-time systems, missing deadlines in best effort systems may have little to no overall effect on the output. For example, in a standard personal computer there are many processes which must be performed but may not be time critical.

In one or more electronic real-time systems, processors are configured to perform predetermined tasks and to then transmit their output data resulting from the performance of the predetermined task to a further component, via the data bus, in the shortest time possible. In some situations it is necessary for a processor to be able to function on such short timescales and, similarly, it may be necessary for the data bus to be able to transmit large quantities of data very quickly. However, in one or more situations the processing of data and provision of data to the data bus in this manner may not be necessary and/or desirable. For example, if a processor completes a task and transmits its output in a quarter of the time required before it must perform its next task or the processor output is used, then a there is a dead-time during which no data is being transmitted via the data bus between the first task and a subsequent task. Operation in this mode may be termed as bursty behaviour.

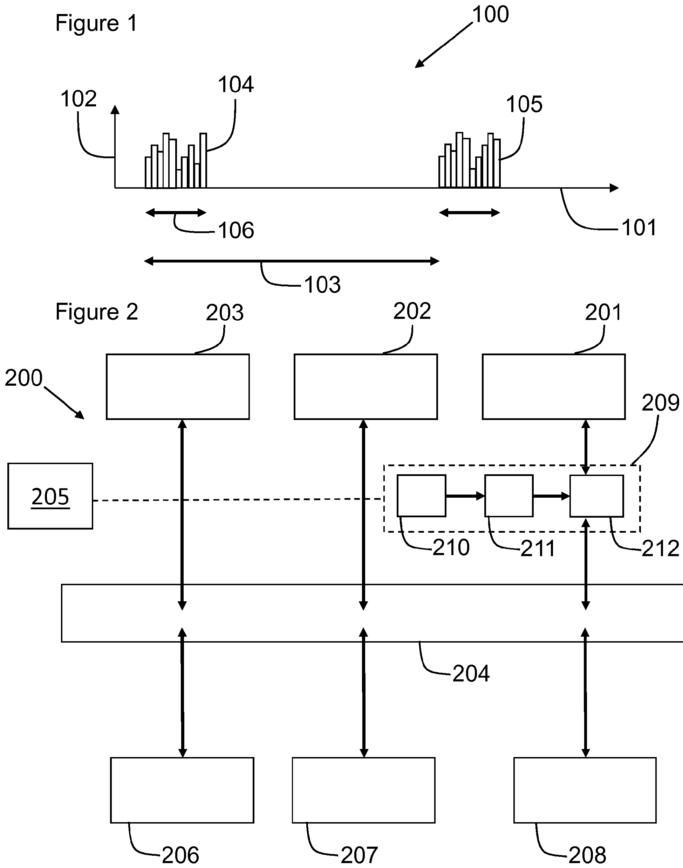

Figure 1 shows a graph 100 with time along the x-axis 101 and units of data 102 along the y-axis. A first burst of data 104 shows the data output due to the performance of a first predetermined task. A second burst of data 105 shows the data output due to the performance of a second, subsequent, predetermined task. The second predetermined task is scheduled for a period of time 103 after the first predetermined task 104. Thus, arrow 103 shows a length of time available for performing the first predetermined task before the data bus must receive data resulting from the second predetermined task. The second predetermined task may be performed by the same processor as the first predetermined task or a different processor. As described earlier, it is typical for an apparatus to complete the first and second predetermined tasks and transmit the associated output data in as short a time as possible. This behaviour is represented by data output 104 which is transmitted over the data bus over a time 106, much shorter than the time available represented by arrow 103.

A system controller may be configured to schedule and manage the performance of predetermined tasks by an apparatus comprising a plurality of processors. Bursty activity, such as that shown in figure 1, may cause other components of the apparatus to behave differently than they would under normal conditions, thereby making it difficult for a system controller to guarantee correct and timely system operation. Because of the uncertainty in operation caused by bursty behaviour, the apparatus may be provided with a controller to mitigate the effect of bursty data bus usage in a real-time system. In some examples, this can be achieved by modelling the system under a range of operating conditions to ensure that bursty activity will not negatively impact performance of the system. However, even for moderately complex systems, combinatorial explosion of possible operating conditions and system states prevents the modelling of operating conditions under all possible scenarios.

Figure 2 shows an apparatus 200 according to an embodiment of the disclosure. The apparatus comprises a plurality of processors 201, 202, 203 and a data bus 204 shared by the plurality of processors 201, 202, 203. The data bus is configured to at least receive data processed by each of the plurality of processors 201, 202, 203 when performing predetermined tasks, the plurality of processors 201, 202, 203 and data bus 204 comprising at least part of a hardware based real-time computing system. The apparatus 200 further comprises a controller 205 configured to provide for control of a maximum data rate at which data is provided to the data bus 204 for transmission thereover by at least one of the plurality of processors 201 in performing at least one of the predetermined tasks. The controller 205 provides for a maximum data rate at least comprising an impeded rate for performing the predetermined task and an unimpeded rate wherein the impeded rate is less than the unimpeded rate. The impeded rate comprises a rate that is less than a maximum rate at which the data bus 204 is able to transmit data at the time of performing the at least one of the predetermined tasks and less than a maximum rate at which the at least one processor 201 is able to generate the data for transmission over the data bus 204 in performing the at least one predetermined task.

In this embodiment there are three processors 201, 202, 203 shown, although in one or more examples, a different plurality of processors may share the data bus 204. In one or more examples, the data bus 204 may have connected thereto, for communication with one or more of the processors, one or more of a memory 206, a display 207, a peripheral 208, a sensor and a user feedback element. In one or more examples, the data bus 204 may be connected to a further data bus by a bridge. The further data bus may provide for connection to a plurality of peripheral devices, further processors and/or memory.

In Figure 2, the controller 205 is shown associated with one of the processors 201. However, the controller 205 may provide for control of the maximum data rate that one or more of the processors 201, 202, 203 may transmit data onto the data bus 204 for transmission thereover. In one or more embodiments, the controller may be comprised of a plurality of sub-controllers, each of which is associated with a corresponding processor. Alternatively, each of a plurality of separate controllers may be associated with a corresponding one of the plurality of processors.

Thus, the controller 204 may act as a throttle to control the maximum data rate by providing a limit on the maximum data rate at which data from at least one of the processors is transferred to the bus. The controller 204 may provide a maximum data rate comprising an unimpeded rate in which the predetermined task is performed at the maximum possible speed the processor/data bus may handle the predetermined task taking account of the resources of the processor and the resources of the data bus available at the time the predetermined task is performed. However, the data rate may be throttled by provision of a maximum data rate comprising the slower, impeded data rate. The impeded data rate may comprise a rate that is slower than could be achieved by the processor/data bus at the time of performing the predetermined task. The impeded data rate may be based on a predetermined task output time comprising the time until a subsequent scheduled predetermined task from initiation of a current predetermined task.

Advantageously, by providing for control of the maximum data rate at which data is provided to the data bus 204, bursty data in the data bus 204 may be avoided while still enabling the system to meet any required deadlines. Further, controlling the maximum data transfer rate may reduce the stress on the system resources, resulting in lesser impact on the operation of the other components in the system. Provision of a maximum data rate that is an impeded rate may further place a lower stress on the system controller for all of the processors 201, 202, 203 and other components in the system.

During bursty behaviour caused by an unimpeded, rapid high volume of data traffic between at least one of the plurality of processors 201 and the data bus, the entire bandwidth of the data bus 204 may be occupied with data output from (or input to) a single processor 201 for a (possibly short) period of time. Advantageously, by providing an impeded rate for passing data from the at least one processor 201 to the data bus 204, the burden on other components and the system controller may be reduced. This may allow the apparatus to operate under more complex conditions and/or more reliably and/or robustly than would be possible during a bursty mode of operation.

In one or more examples, the apparatus 200 may comprise a radio system, a personal computer, a portable electronic device, a graphics processing unit or a satellite navigation system, a radio for a mobile telephone, a media player or a (e.g. high quality) audio amplifier with digital input.

The plurality of processors 201, 202, 203 may comprise any combination of programmable processors and/or hardware accelerators.

The predetermined task may be any task comprising one or more instructions that the at least one or more processors 201 may perform in processing input data to produce output data. In particular, the predetermined task may be one or more of a digital filter, sample rate convertor, digital mixing and combinations thereof.

In one or more examples, the controller 205 may comprise a plurality of sub-controllers wherein each sub-controller is associated with a different one of the plurality of processors.

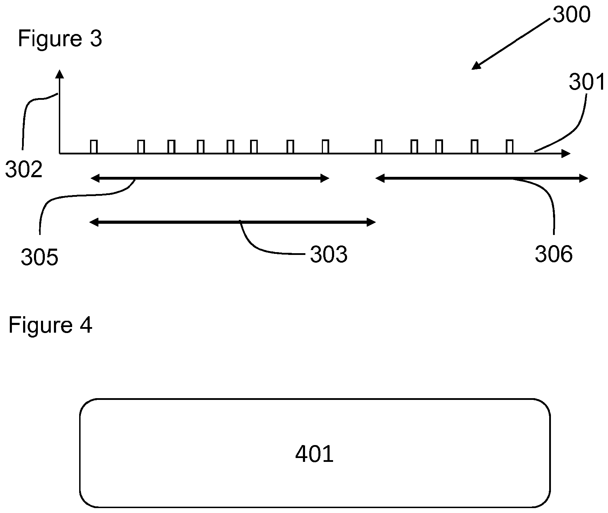

Figure 3 shows a graph 300 in which the controller has provided a maximum data rate comprising an impeded rate for the predetermined tasks. The graph 300 shows time along the x-axis 301 and units of data 302 along the y-axis. Analogously to figure 1, arrow 303 shows the length of time available for performing a first predetermined task before a subsequent predetermined task is scheduled. The maximum data rate at which the total output data was transferred from the at least one processor to the data bus in figure 1, was an unimpeded data rate and so resulted in bursty behaviour. In the example illustrated in Figure 3, the maximum data rate at which the total output data is transferred from the at least one processor to the data bus is impeded, resulting in the transfer of the data being spread over the time represented by arrow 305, which may comprise the predetermined task output time.

The maximum data rate provided by the controller may be based on a determination of the time that is available for transferring the data to the data bus such as until a subsequent predetermined task is scheduled or until the data bus is next required to transfer data. Accordingly, by providing for limitation of the maximum data rate, the controller may use more of the time available between subsequent predetermined tasks that require data bus usage. This may result in reduced bursty usage of the data bus.

The controller may split the total data output in performance of the predetermined task into a plurality of blocks of data and transfer those blocks of data to the data bus over a plurality of intervals that extends over the predetermined task output time available. Once all of the output data of the first predetermined task has been sent to the data bus, the output data of a second predetermined task may be transferred to the data bus over a predetermined task output time for the second predetermined task, as represented by arrow 306. In this example, the impeded rate is achieved by provision of transmission of time-spaced blocks of data, although in other examples, a continuous data flow across the data bus may be provided. In one or more examples, each block may be any size. In one or more examples, each block may be of a size based on the total data required to be passed to the data bus as a result of performance of a predetermined task and a time period available for said predetermined task, such as until a subsequent predetermined task is performed that requires access to the data bus. In one or more examples, each block may be of a size greater than a minimum amount that the data bus is configured to carry in any one period the bus is available for receiving data. For example, the data bus may be configured to carry a minimum of one byte.

The maximum data rate may be the rate at which data is transferred from the at least one processor 201 to the data bus 204 for a predetermined task. The maximum data rate may be altered by the controller 205 in order to provide for a more uniform transfer of data from the at least one processor 201 to the data bus 204 over the time available for performing a given predetermined task. Controlling the maximum data rate so as to provide for a more uniform transfer of data may require the data to flow at an impeded rate. Alternatively, for some other predetermined tasks, the controller 205 may not restrict the rate at which data is passed from the at least one processor 201 to the data bus 204. When the controller 205 does not restrict the rate of data flow, the data may flow from the at least one processor 201 to the data bus 204 at an unimpeded rate. The impeded rate may be less than the maximum data rate at which data could be provided to the data bus by at least one of the plurality of processors 201 in performing the at least one of the predetermined tasks, at the time of performing the predetermined task.

At a given time, for a predetermined task, the unimpeded rate may be the lowest rate of any of: the maximum rate at which the at least one processor 201 can process the data required for the predetermined task; the maximum rate at which data can be passed from the at least one processor 201 to the data bus 204 based on the bandwidth of the data bus and any other loads on the data bus 204 at the time of data transfer; and a maximum rate at which data can be transferred from the at least one processor 201 to the data bus 204 as a result of another constraint on the system which cannot be controlled at the time of performing the predetermined task. In other examples, the unimpeded rate may not be a rate limited by the maximum performance of the combination of hardware used to perform the predetermined task but may be an (e.g. arbitrary) rate greater than the impeded rate. It will be appreciated that the controller may provide for additional maximum data rates in addition to the impeded and unimpeded data rates.

In one or more embodiments the controller 205 may control the rate at which the data is transmitted from the at least one processor 201 to the data bus 204 by controlling the rate at which the at least one processor 201 performs the at least one predetermined task. Accordingly, control of the performance of the processor may provide for control of the maximum data rate at which data is provided to the data bus 204. In one or more embodiments, the controller 205 may provide for the maximum data rate by control of access to the data bus 204. For example, one or more of the processors may be associated with a buffer in which data processed by the processor is temporarily stored before being placed on the data bus at up to the maximum data rate. For example, the controller may control the maximum rate at which blocks of data are transferred from the buffer of the at least one processor 201 to the data bus 204. In one or more embodiments a combination of controlling access to the data bus and the rate at which the processor performs the predetermined task may be used to control the maximum data rate. The controller 205 may be configured to divide the total data output in performing the at least one predetermined task into a plurality of blocks of data. Alternatively, the at least one processor 201 may be configured to, after performing the at least one predetermined task, divide the total data output in performing said at least one predetermined task into a plurality of blocks of data under the control of the controller. The controller 205 may be configured to provide for a maximum data rate comprising an impeded rate at which data is transferred from the at least one processor 201 to the data bus 2054 by controlling the rate of access for the blocks of data to the data bus 204.

The controller 205 may be configured to provide an impeded rate by allocating a predetermined number of intervals during which the blocks of data are provided with access to the data bus 204 over a predetermined time period. For example, the controller may be configured to split the output data down into n blocks of data and further configured to assign n intervals of time during which those blocks of data may be transferred from the processor to the data bus wherein n is a number chosen according to the amount of time available and the length of time required to send each block of data. The predetermined number of intervals may follow on from one another consecutively and/or they may be spaced by intervals during which no data is transmitted from the at least one processor 201 to the data bus 204. Thus, in terms of data flow over the bus, the blocks may be sent in a continuous or discontinuous manner. For one or more predetermined tasks, some of the intervals may follow one another without a time intervals between them, thereby providing a stream of blocks of data. In other embodiments, the intervals may be spaced in time such that the blocks of data are provided to the data bus 204 in pulses. In some embodiments, where the blocks of data are provided to the data bus in pulses by a first processor, a second processor may provide pulses of data to the data bus during the intervals between the data pulses of the first processor.

The controller 205 may be configured to define the maximum data rate for a first predetermined task at a first impeded rate and define the maximum data rate for a second predetermined task at a second rate, different to the first rate. The first and second rates may be dependent on the time available until the next predetermined task is scheduled to be performed. The second predetermined task may be performed at an unimpeded rate. Alternatively the second task may be performed at a second impeded rate wherein the second impeded rate is different to the first impeded rate. This may be particularly advantageous, because a first predetermined task may have a different quantity of output data and/or a different predetermined amount of time during which to perform the first predetermined task as compared to a second predetermined task. By selecting an optimal maximum data transfer rate for a given predetermined task, the system may avoid bursty behaviour and instead maintain more controlled and/or predictable operating conditions.

It will be appreciated that for a real-time system the predetermined tasks may generate known or predictable amounts of data and the time at which subsequent predetermined tasks are scheduled may be known in advance. Accordingly, one or more impeded rates may be provided by the controller based on the known data bus usage and the times predetermined tasks are scheduled.

In one or more embodiments of the disclosure, a bus access controller 209 may be associated with one or more of the processors 201, 202, 203 for controlling the rate at which data generated by the processors 201, 202, 203 is passed to the data bus 204 for transmission thereover. In one or more embodiments, there may be provided a plurality of bus access controllers and each of the plurality of bus access controllers may be associated with a corresponding processor. The controller 205 may be configured to provide bus access tokens to the bus access controller 209. The or each bus access controller 209 may be configured to sequentially receive and store bus access tokens as they are issued by the controller. A bus access token may represent a permission for one block of data to be transmitted from the at least one processor 201 to the data bus 204. In this example, storing a bus access token represents keeping a count of the total number of bus access tokens stored by the bus access controller 209. The bus access controller 209 may receive bus access tokens from the controller 205 and may also expend bus access tokens in order to allow data to pass from the at least one processor 201 to the data bus 204. Thus, the skilled person will appreciate that the number of bus access tokens stored by the bus access controller 209 is equal to the number of received tokens minus the number of expended tokens.

In one or more embodiments, the controller 205 may be configured to generate the bus access tokens or, alternatively, the bus access tokens may be generated by another component such as a timer 210 to be subsequently received by the bus access controller 209 and stored in an access token counter 211. Data may be prevented from flowing from the at least one of the plurality of processors 201 to the data bus 204 by a bus access gate 212 until the bus access controller 209 expends a bus access token, at which point the bus access gate 212 may allow a single block of data to pass from the at last one processor 201 to the data bus 204.

In this example, the bus access tokens received by the bus access controller 209 from the controller 205 are received sequentially, as opposed to being received all at the same time. The number of bus access tokens received by the bus access controller 209 may be equal to the number of intervals required in order to transfer all of the blocks of data generated in performing a predetermined task. The bus access tokens may be received at regular intervals. In another embodiment, the bus access tokens may be generated at predetermined irregular intervals in order to provide tokens at points in time when it is known that the load on the data bus 204 will be low. The bus access controller 209 may expend or consume one of the stored bus access tokens in order to allow one of the blocks of data to be transmitted from the at least one processor 201 to the data bus 204 through the bus access gate 212. By operating in this manner, the stored number of bus access tokens will be equal to zero after all of the blocks of data for a predetermined task have been transferred to the data bus 204.

The bus access controller 209 may be configured to expend a bus access token only when: sufficient data has been output by the at least one processor 201 to form a block of data; the total number of bus access tokens stored by the bus access controller 209 is greater than zero (i.e., there is a bus access token available to be expended); and the data bus 204 has sufficient resources available to accommodate receiving the block of data from the at least one processor 204. In some circumstances, the load on the data bus 204 may be sufficiently high that it cannot receive a data block. Alternatively, the load on the data bus 204 may be at a level that, even though it could receive the data, receipt of such data would result in an undesirably large load on the data bus 204. Under either of the above mentioned conditions, it may be either impossible or undesirable to transfer a block of data from the at least one processor 201 to the data bus 204. Thus, it is important that the bus access controller 209 does not expend a bus access token under these conditions. Bus access tokens stored in the bus access controller 209 may not expire and therefore, if the bus access controller 209 is unable to allow data to flow from the at least one data processor 201 to the data bus 204, a plurality of bus access tokens may be received and stored by the access token counter 211 before the bus access controller 209 can once again begin to expend bus access tokens.

The skilled person will appreciate that sending a block of data from the at least one processor 201 to the data bus 204 which is smaller than the maximum amount of data which could be sent to the data bus 204 will result in only a predetermined percentage of the data bus bandwidth being utilised by the block of data for a predetermined amount of time. The remainder of the bandwidth of the data bus 204 may receive data from a second one of the plurality of processors 202. Alternatively, the remainder of the bandwidth of the data bus may be left unloaded, thereby avoiding bursty behaviour in the system.

In one or more examples, the apparatus 200 may form part of an electronic device such as a mobile telephone, the apparatus 200 comprising components of a radio transmitter/receiver for providing connectivity for the mobile phone with a mobile telecommunication network.

Figure 4 shows a flow diagram representing an example method. The method comprises controlling a maximum data rate 401 at which data is provided to a data bus for transmission thereover by at least one of a plurality processors in performing at least one of a plurality of predetermined tasks by providing for an impeded rate or an unimpeded rate, the impeded rate comprising a rate that is less than an unimpeded data bus rate at which the data bus is able to transmit data at the time of performing the at least one of the predetermined tasks and less than an unimpeded processor rate at which the at least one processor is able to generate the data for transmission over the data bus in performing the at least one predetermined task.

In one or more examples the apparatus 200 may comprise a system on a chip (SoC), although in one or more examples, the apparatus 200 may be implemented to control data flow across a bus shared between two SoCs.

In the above examples, the controller may provide for control of the maximum data rate by providing an upper limit on rate at which data may be passed to the data bus, such that a processor may pass data to the bus at any rate lower than the maximum data rate in its performance of the predetermined task. In one or more examples, the controller may be configured to provide the maximum data rate by control of the rate at which the data is placed on the bus when performing the predetermined task.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules, hardware accelerators or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services.

## Claims

1. An apparatus (200) comprising:
a plurality of processors (201, 202, 203),
a data bus (204), shared by the plurality of processors (201, 202, 203), and configured to at least receive data processed by each of the plurality of processors when performing predetermined tasks, the plurality of processors and data bus comprising at least part of a real-time computing system, wherein the predetermined tasks generate known or predictable amounts of data and the time at which subsequent predetermined tasks are scheduled is known in advance; the apparatus is **characterized in** further comprising
a controller (205) configured to provide for control of a maximum data rate at which data is provided to the data bus (204) for transmission thereover by at least one of the plurality of processors (201, 202, 203) in performing at least one of the predetermined tasks, wherein the controller is configured to provide for a maximum data rate at least comprising an impeded rate for the at least one predetermined tasks and an unimpeded rate wherein the impeded rate is less than the unimpeded rate and wherein the impeded rate comprising a rate that is less than a maximum rate at which the data bus is able to transmit data at the time of performing the at least one of the predetermined tasks and less than a maximum rate at which the at least one processor is able to generate the data for transmission over the data bus in performing the at least one predetermined task, wherein the controller is configured to divide the total data output in performing the at least one predetermined task into a plurality of blocks of data and wherein the controller is configured to provide the impeded data rate by allocating a predetermined number of intervals during which the blocks of data are provided to the data bus and wherein the number of allocated predetermined intervals is dependent on the amount of data generated by the predetermined task, the size of each of the blocks of data and a predetermined task output time comprising an amount of time during which the processed data can be output to the data bus before a subsequent predetermined task is scheduled to be performed.

2. The apparatus (200) of claim 1, wherein the impeded rate is less than the maximum data rate at which data could be provided to the data bus (204) by at least one of the plurality of processors (201, 202, 203) in performing the at least one of the predetermined tasks, at the time of performing the predetermined task.

3. The apparatus (200) of any preceding claim wherein the controller (205) is configured to, for a first task of the predetermined tasks for processing by the at least one of the plurality of processors (201, 202, 203), provide a maximum data rate comprising a first impeded rate and for a second task of the predetermined tasks for processing by the at least one processor, provide a maximum data rate comprising a second, different, impeded rate, thereby providing for task dependent data rate usage of the data bus (204).

4. The apparatus (200) of any preceding claim wherein the controller (205) is comprised of a plurality of sub-controllers, wherein each of the sub-controllers is associated with one of the plurality of processors (201, 202, 203) and configured to control the maximum data rate its associated processor is able to provide at least processed data to the data bus (204).

5. The apparatus (200) of any preceding claim, wherein the controller (205) is configured to control the maximum data rate by allowing the blocks of data to be transmitted to the data bus (204) one or more of consecutively and at time spaced intervals.

6. The apparatus (200) of any preceding claim, wherein the at least one processor (201, 202, 203) is associated with a bus access controller (209) and the controller (205) is configured to provide for the control of the maximum data rate by provision of bus access tokens to the bus access controller, the number of bus access tokens for a particular predetermined task and the size of the blocks configured to provide for transmission of all of the data output by the processor during performance of the particular predetermined task, the or each bus access controller configured to sequentially receive and store the bus access tokens as they are issued by the controller for each of the predetermined number of intervals, wherein each of the bus access tokens represents a permission for one of the blocks of data to be transmitted from the processor to the data bus (204);
wherein the bus access controller (209) may expend one of the stored bus access tokens and thereby allow one of the blocks of data to be transmitted from the processor (201, 202, 203) to the data bus (204) only when:
i) sufficient data has been output by the at least one processor to form a block;
ii) the total number of bus access tokens stored by the bus access controller is greater than zero; and
iii) the data bus has sufficient resources available to accommodate receiving the block of data from the processor.

7. The apparatus (200) of claim 6 wherein the bus access tokens are received by the controller (205) at regular intervals, the size of the interval and the size of the block providing for the impeded data rate over the performance of the predetermined task.

8. The apparatus (200) of any preceding claim, wherein the real-time system is a hard real-time computing system.

9. The apparatus (200) of any preceding claim wherein at least one of the processor units comprises one or more of a hardware accelerator and a programmable processor.

10. An electronic device including apparatus of claims 1 - 9.

11. A method of operating a real-time computing system comprising:
Controlling a maximum data rate (401) at which data is provided to a data bus for transmission thereover by at least one of a plurality processors in performing at least one of a plurality of predetermined tasks, wherein the predetermined tasks generate known or predictable amounts of data and the time at which subsequent predetermined tasks are scheduled is known in advance, said controlling being realized by providing for an impeded rate for the at least one predetermined task and an unimpeded rate, the impeded rate comprising a rate that is less than the unimpeded rate and wherein the impeded rate comprising a rate that is less than a maximum rate at which the data bus is able to transmit data at the time of performing the at least one of the predetermined tasks and less than a maximum rate at which the at least one processor is able to generate the data for transmission over the data bus in performing the at least one predetermined task, wherein controlling the maximum data rate comprises dividing the total data output in performing the at least one predetermined task into a plurality of blocks of data and providing the impeded data rate by allocating a predetermined number of intervals during which the blocks of data are provided to the data bus and wherein the number of predetermined intervals is dependent on the amount of data generated by the predetermined task, the size of each of the blocks of data and a predetermined task output time comprising an amount of time during which the processed data can be output to the data bus before a subsequent predetermined task is scheduled to be performed.

12. A computer readable medium comprising computer program code stored thereon, the computer readable medium and computer program code being configured to, when run on at least one processor, perform the method of claim 11.

## Patentansprüche

1. Vorrichtung (200), die Folgendes umfasst:
eine Vielzahl von Prozessoren (201, 202, 203),
einen Datenbus (204), der von der Vielzahl von Prozessoren (201, 202, 203) gemeinsam genutzt wird und dazu ausgebildet ist, zumindest Daten zu empfangen, die von jedem der Vielzahl von Prozessoren verarbeitet werden, wenn sie vorbestimmte Tasks durchführen, wobei die Vielzahl von Prozessoren und der Datenbus zumindest einen Teil eines Echtzeit-Computersystems umfassen, wobei die vorbestimmten Tasks bekannte oder vorhersagbare Datenmengen erzeugen und die Zeit, zu der nachfolgende vorbestimmte Tasks geplant werden, im Voraus bekannt ist, wobei die Vorrichtung **dadurch gekennzeichnet ist, dass** sie ferner Folgendes umfasst:
einen Controller (205), der dazu ausgebildet ist, die Steuerung einer maximalen Datenrate bereitzustellen, bei der Daten dem Datenbus (204) zur Übertragung darüber durch mindestens einen der Vielzahl von Prozessoren (201, 202, 203) beim Durchführen mindestens einer der vorbestimmten Tasks bereitgestellt werden,
wobei der Controller dazu ausgebildet ist, eine maximale Datenrate bereitzustellen, die zumindest eine eingeschränkte Rate für die mindestens eine vorbestimmte Task und eine uneingeschränkte Rate umfasst,
wobei die eingeschränkte Rate geringer ist als die uneingeschränkte Rate, und
wobei die eingeschränkte Rate eine Rate aufweist, die geringer ist als eine maximale Rate, bei der der Datenbus in der Lage ist, Daten beim Durchführen des mindestens einen der vorbestimmten Tasks zu übertragen, und geringer ist als eine maximale Rate, bei der der mindestens eine Prozessor in der Lage ist, die Daten zur Übertragung über den Datenbus beim Durchführen des mindestens einen vorbestimmten Tasks zu erzeugen,
wobei der Controller dazu ausgebildet ist, die gesamte Datenausgabe beim Durchführen des mindestens einen vorbestimmten Tasks in eine Vielzahl von Datenblöcken zu unterteilen, und
wobei der Controller dazu ausgebildet ist, die eingeschränkte Datenrate durch Zuweisung einer vorbestimmten Anzahl von Intervallen bereitzustellen, während derer die Datenblöcke dem Datenbus bereitgestellt werden, und
wobei die Anzahl der zugewiesenen vorbestimmten Intervalle von der Menge der durch den vorbestimmten Task erzeugten Daten, der Größe jedes der Datenblöcke und einer vorbestimmten Task-Ausgabezeit abhängig ist, die Folgendes umfasst: eine Zeitspanne, während der die verarbeiteten Daten an den Datenbus ausgegeben werden können, bevor ein nachfolgender vorbestimmter Task durchgeführt werden soll.

2. Vorrichtung (200) nach Anspruch 1, wobei die eingeschränkte Rate geringer ist als die maximale Datenrate, bei der Daten beim Durchführen des mindestens einen der vorbestimmten Tasks von mindestens einem der Vielzahl von Prozessoren (201, 202, 203) an den Datenbus (204) bereitgestellt werden könnten.

3. Vorrichtung (200) nach einem beliebigen vorhergehenden Anspruch, wobei der Controller (205) ausgebildet ist, um für einen ersten Task der vorbestimmten Tasks zur Verarbeitung durch den mindestens einen der Vielzahl von Prozessoren (201, 202, 203) eine maximale Datenrate bereitzustellen, die eine erste eingeschränkte Rate aufweist, und für einen zweiten Task der vorbestimmten Tasks zur Verarbeitung durch den mindestens einen Prozessor eine maximale Datenrate bereitzustellen, die eine zweite, unterschiedliche eingeschränkte Rate aufweist, wodurch eine aufgabenabhängige Datenratenverwendung des Datenbusses (204) bereitgestellt wird.

4. Vorrichtung (200) nach einem beliebigen vorhergehenden Anspruch, wobei der Controller (205) eine Vielzahl von Sub-Controllern aufweist, wobei jeder der Sub-Controller einem der Vielzahl von Prozessoren (201, 202, 203) zugeordnet ist und dazu ausgebildet ist, die maximale Datenrate zu steuern, mit der sein zugeordneter Prozessor in der Lage ist, zumindest verarbeitete Daten auf dem Datenbus (204) bereitzustellen.

5. Vorrichtung (200) nach einem beliebigen vorhergehenden Anspruch, wobei der Controller (205) so ausgebildet ist, dass er die maximale Datenrate steuert, indem er zulässt, dass die Datenblöcke nacheinander und in zeitlich beabstandeten Intervallen an den Datenbus (204) übertragen werden.

6. Vorrichtung (200) nach einem beliebigen vorhergehenden Anspruch, wobei der mindestens eine Prozessor (201, 202, 203) mit einem Buszugriffscontroller (209) verbunden ist und der Controller (205) ausgebildet ist, um die Steuerung der maximalen Datenrate durch Bereitstellen von Buszugriffstoken für den Buszugriffscontroller bereitzustellen,
wobei die Anzahl der Buszugriffstoken für einen bestimmten vorbestimmten Task und die Größe der Blöcke dazu ausgebildet sind, die Übertragung aller Daten bereitzustellen, die vom Prozessor während der Durchführung der bestimmten vorbestimmten Task ausgegeben werden,
jeder Buszugriffscontroller dazu ausgebildet ist, die Buszugriffstoken sequentiell zu empfangen und zu speichern, wenn sie von dem Controller für jedes der vorbestimmten Anzahl von Intervallen ausgegeben werden,
wobei jeder der Buszugriffstoken eine Erlaubnis für einen der Blöcke von Daten repräsentiert, die vom Prozessor auf den Datenbus (204) übertragen werden sollen;
wobei der Buszugriffscontroller (209) einen der gespeicherten Buszugriffstoken ausgeben kann und dadurch zulässt, dass einer der Datenblöcke vom Prozessor (201, 202, 203) auf den Datenbus (204) übertragen wird, nur wenn:
i) genügend Daten von dem mindestens einen Prozessor ausgegeben worden sind, um einen Block zu bilden;
ii) die Gesamtzahl der vom Buszugriffscontroller gespeicherten Buszugriffstoken größer als Null ist; und
iii) der Datenbus über genügend Ressourcen verfügt, um den Datenblock vom Prozessor empfangen zu können.

7. Vorrichtung (200) nach Anspruch 6, wobei die Buszugriffstoken von dem Controller (205) in regelmäßigen Intervallen empfangen werden, wobei die Größe des Intervalls und die Größe des Blocks für die eingeschränkte Datenrate bei der Durchführung des vorbestimmten Tasks sorgen.

8. Vorrichtung (200) nach einem beliebigen vorhergehenden Anspruch, wobei das Echtzeitsystem ein hartes Echtzeit-Computersystem ist.

9. Vorrichtung (200) nach einem beliebigen vorhergehenden Anspruch, wobei mindestens eine der Prozessoreinheiten einen oder mehrere von einem Hardware-Beschleuniger und einem programmierbaren Prozessor aufweist.

10. Elektronische Vorrichtung, die eine Vorrichtung nach den Ansprüchen 1-9 aufweist.

11. Verfahren zum Betreiben eines Echtzeit-Computersystems, das Folgendes umfasst:
Steuern einer maximalen Datenrate (401), bei der Daten einem Datenbus zur Übertragung darüber durch mindestens einen einer Vielzahl von Prozessoren bereitgestellt werden, beim Durchführen von mindestens einem einer Vielzahl von vorbestimmten Tasks,
wobei die vorbestimmten Tasks bekannte oder vorhersagbare Datenmengen erzeugen und die Zeit, zu der nachfolgende vorbestimmte Tasks geplant werden, im Voraus bekannt ist, wobei das Steuern durch Bereitstellen einer eingeschränkten Rate für den mindestens einen vorbestimmten Task und einer uneingeschränkten Rate realisiert wird, wobei die eingeschränkte Rate eine Rate aufweist, die geringer als die uneingeschränkte Rate ist, und
wobei die eingeschränkte Rate eine Rate aufweist, die geringer ist als eine maximale Rate, bei der der Datenbus in der Lage ist, Daten beim Durchführen des mindestens einen der vorbestimmten Tasks zu übertragen, und geringer ist als eine maximale Rate, bei der der mindestens eine Prozessor in der Lage ist, die Daten zur Übertragung über den Datenbus beim Durchführen des mindestens einen vorbestimmten Tasks zu erzeugen,
wobei das Steuern der maximalen Datenrate Folgendes umfasst: Aufteilen der gesamten Datenausgabe beim Durchführen des mindestens einen vorbestimmten Tasks in eine Vielzahl von Datenblöcken und Bereitstellen der eingeschränkten Rate durch Zuordnen einer vorbestimmten Anzahl von Intervallen, während derer die Datenblöcke dem Datenbus bereitgestellt werden, und
wobei die Anzahl der vorbestimmten Intervalle von der Menge der durch den vorbestimmten Task erzeugten Daten, der Größe jedes der Datenblöcke und einer vorbestimmten Task-Ausgabezeit abhängig ist, die Folgendes umfasst: eine Zeitspanne, während der die verarbeiteten Daten an den Datenbus ausgegeben werden können, bevor ein nachfolgender vorbestimmter Task durchgeführt werden soll.

12. Computerlesbares Medium, das darauf gespeicherten Computerprogrammcode enthält, wobei das computerlesbare Medium und der Computerprogrammcode dazu ausgelegt sind, bei Ausführung auf mindestens einem Prozessor das Verfahren nach Anspruch 11 durchzuführen.

## Revendications

1. Appareil (200) comprenant :
une pluralité de processeurs (201, 202, 203),
un bus de données (204), partagé par la pluralité de processeurs (201, 202, 203), et configuré pour au moins recevoir des données traitées par chacun de la pluralité de processeurs lors de l'exécution de tâches prédéterminées, la pluralité de processeurs et le bus de données comprenant au moins une partie d'un système informatique en temps réel, où les tâches prédéterminées génèrent des quantités connues ou prévisibles de données, et le moment auquel les tâches prédéterminées suivantes sont programmées est connu à l'avance ; l'appareil étant **caractérisé en ce qu'**il comprend en outre :
un contrôleur (205) configuré pour assurer le contrôle d'un débit de données maximum auquel les données sont fournies au bus de données (204) pour être transmises sur celui-ci par au moins un de la pluralité de processeurs (201, 202, 203) en exécutant au moins une des tâches prédéterminées, où le contrôleur est configuré pour fournir un débit de données maximum comprenant au moins un débit entravé pour l'au moins une tâche prédéterminée et un débit non entravé, où le débit entravé est inférieur au débit non entravé et où le débit entravé comprend un débit qui est inférieur à un débit maximum auquel le bus de données est capable de transmettre des données au moment de l'exécution de l'au moins une des tâches prédéterminées et inférieur à un débit maximum auquel l'au moins un processeur est capable de générer les données pour une transmission sur le bus de données en exécutant l'au moins une tâche prédéterminée, où le contrôleur est configuré pour diviser la sortie de données totale, lors de l'exécution de l'au moins une tâche prédéterminée, en une pluralité de blocs de données, et où le contrôleur est configuré pour fournir le débit de données entravé en allouant un nombre prédéterminé d'intervalles pendant lesquels les blocs de données sont fournis au bus de données, et où le nombre d'intervalles prédéterminés alloués dépend de la quantité de données générées par la tâche prédéterminée, de la taille de chacun des blocs de données et d'un temps de sortie de tâche prédéterminé comprenant une quantité de temps pendant laquelle les données traitées peuvent être délivrées en sortie sur le bus de données avant qu'une tâche prédéterminée suivante soit programmée pour être exécutée.

2. Appareil (200) selon la revendication 1, dans lequel le débit entravé est inférieur au débit de données maximum auquel les données pourraient être fournies au bus de données (204) par au moins un de la pluralité de processeurs (201, 202, 203) en exécutant l'au moins une des tâches prédéterminées, au moment de l'exécution de la tâche prédéterminée.

3. Appareil (200) selon l'une quelconque des revendications précédentes, dans lequel le contrôleur (205) est configuré, pour une première tâche des tâches prédéterminées à traiter par l'au moins un de la pluralité de processeurs (201, 202, 203), pour fournir un débit de données maximum comprenant un premier débit entravé et, pour une deuxième tâche parmi les tâches prédéterminées à traiter par l'au moins un processeur, pour fournir un débit de données maximum comprenant un deuxième débit entravé différent, assurant ainsi une utilisation du débit de données dépendant de la tâche du bus de données (204).

4. Appareil (200) selon l'une quelconque des revendications précédentes, dans lequel le contrôleur (205) est composé d'une pluralité de sous-contrôleurs, où chacun des sous-contrôleurs est associé à l'un de la pluralité de processeurs (201, 202, 203) et configuré pour contrôler le débit de données maximum que son processeur associé est capable de fournir en au moins des données traitées au bus de données (204).

5. Appareil (200) selon l'une quelconque des revendications précédentes, dans lequel le contrôleur (205) est configuré pour contrôler le débit de données maximum en permettant aux blocs de données d'être transmis au bus de données (204) à un ou plusieurs intervalles consécutifs et espacés dans le temps.

6. Appareil (200) selon l'une quelconque des revendications précédentes, dans lequel l'au moins un processeur (201, 202, 203) est associé à un contrôleur d'accès au bus (209), et le contrôleur (205) est configuré pour assurer le contrôle du débit de données maximum par la fourniture de jetons d'accès au bus au contrôleur d'accès au bus, le nombre de jetons d'accès au bus pour une tâche prédéterminée particulière et la taille des blocs étant configurés pour assurer la transmission de toutes les données délivrées en sortie par le processeur pendant l'exécution de la tâche prédéterminée particulière, le ou chaque contrôleur d'accès au bus étant configuré pour recevoir et stocker séquentiellement les jetons d'accès au bus à mesure qu'ils sont émis par le contrôleur pour chacun du nombre prédéterminé d'intervalles, où chacun des jetons d'accès au bus représente une autorisation pour l'un des blocs de données à être transmis du processeur au bus de données (204) ;
où le contrôleur d'accès au bus (209) peut dépenser un des jetons d'accès au bus stockés et permettre ainsi à l'un des blocs de données d'être transmis du processeur (201, 202, 203) au bus de données (204) uniquement lorsque :
i) suffisamment de données ont été délivrées en sortie par l'au moins un processeur pour former un bloc ;
ii) le nombre total de jetons d'accès au bus stockés par le contrôleur d'accès au bus est supérieur à zéro ; et
iii) le bus de données dispose de ressources suffisantes pour permettre la réception du bloc de données en provenance du processeur.

7. Appareil (200) selon la revendication 6, dans lequel les jetons d'accès au bus sont reçus par le contrôleur (205) à intervalles réguliers, la taille de l'intervalle et la taille du bloc permettant le débit de données entravé pendant l'exécution de la tâche prédéterminée.

8. Appareil (200) selon l'une quelconque des revendications précédentes, dans lequel le système en temps réel est un système de calcul en temps réel à contraintes strictes.

9. Appareil (200) selon l'une quelconque des revendications précédentes, dans lequel au moins une des unités de traitement comprend un ou plusieurs éléments parmi un accélérateur matériel et un processeur programmable.

10. Dispositif électronique comprenant l'appareil des revendications 1 à 9.

11. Procédé d'exploitation d'un système informatique en temps réel, le procédé comprenant les étapes suivantes :
contrôler un débit de données maximum (401) auquel des données sont fournies à un bus de données pour être transmises sur celui-ci par au moins l'un d'une pluralité de processeurs lors de l'exécution d'au moins l'une d'une pluralité de tâches prédéterminées, où les tâches prédéterminées génèrent des quantités connues ou prévisibles de données, et le moment auquel les tâches prédéterminées suivantes sont programmées est connu à l'avance, ledit contrôle étant réalisé en permettant un débit entravé pour l'au moins une tâche prédéterminée et un débit non entravé, le débit entravé comprenant un débit qui est inférieur au débit non entravé et où le débit entravé comprend un débit qui est inférieur à un débit maximum auquel le bus de données est capable de transmettre des données au moment de l'exécution de l'au moins une des tâches prédéterminées et inférieur à un débit maximum auquel l'au moins un processeur est capable de générer les données pour la transmission sur le bus de données en exécutant l'au moins une tâche prédéterminée, où le contrôle du débit de données maximum comprend la division de la sortie de données totale lors de l'exécution de l'au moins une tâche prédéterminée en une pluralité de blocs de données et la fourniture du débit de données entravé en allouant un nombre prédéterminé d'intervalles pendant lesquels les blocs de données sont fournis au bus de données et où le nombre d'intervalles prédéterminés dépend de la quantité de données générées par la tâche prédéterminée, de la taille de chacun des blocs de données et d'un moment de sortie de tâche prédéterminé comprenant une quantité de temps pendant laquelle les données traitées peuvent être délivrées en sortie sur le bus de données avant qu'une tâche prédéterminée suivante soit programmée pour être exécutée.

12. Support lisible par ordinateur comprenant un code de programme informatique y étant stocké, le support lisible par ordinateur et le code de programme informatique étant configurés pour, lorsqu'ils sont exécutés sur au moins un processeur, exécuter le procédé de la revendication 11.
